# EUROPEAN PATENT SPECIFICATION

(11) **EP 4 375 541 B1**
(45) Date of publication and mention of the grant of the patent: **21.10.2026**
(21) Application number: 22209980.6
(22) Date of filing: 28.11.2022
(51) Int. Cl.: F16H 25/20, E02F 9/20, F16H 25/22, F16H 25/24, B66C 23/00

(54) **AN ELECTRO-MECHANICAL ACTUATOR FOR WORKING EQUIPMENT AND A WORKING EQUIPMENT**
ELEKTROMECHANISCHER AKTUATOR FÜR EINE ARBEITSAUSRÜSTUNG UND ARBEITSAUSRÜSTUNG
ACTIONNEUR ÉLECTROMÉCANIQUE POUR ÉQUIPEMENT DE TRAVAIL ET ÉQUIPEMENT DE TRAVAIL

(43) Date of publication of application: 29.05.2024
(73) Proprietor: Hiab AB, 215 32 Malmö (SE)
(72) Inventor: NELSON, Anders, 184 50 Åkersberga (SE)
(74) Representative: Zacco Sweden AB

(56) References cited:
- EP-A1- 1 731 421
- DE-A1- 102020 212 706
- US-A1- 2006 266 146
- US-A1- 2009 095 098
- US-A1- 2018 172 122

## Description

### Technical field

The present invention relates to an electro-mechanical actuator for a working equipment and a working equipment. More specifically, the invention relates to an electro-mechanical actuator for a working equipment according to the preamble of claim 1. The invention also relates to a working equipment equipped with this electro-mechanical actuator.

### Background art

Working equipment, such as cranes, loader cranes, excavators, dumpers, demountables, hooklifts, forklifts and tail lifts, typically comprise hydraulic cylinders for lifting and lowering operations. Hydraulic cylinders have many advantages but hydraulic machinery generally suffers from big energy losses. The hydraulic cylinders are driven by hydraulic fluid under pressure, which may be generated by hydraulic pumps driven by a combustion engine in the vehicle. The general trend for electrification leading to combustion engines being replaced by electric engines, powered by e.g. batteries in vehicles such as trucks also highlights the need for energy efficiency for the working equipment that is mounted to the vehicles.

Electro-mechanical actuators are used in different applications and are typically used to move objects between different positions. An electro-mechanical actuator may comprise a rotating electric motor and a mechanical transmission to convert the rotational speed and torque of the motor to a linear motion. Such mechanical transmission may comprise a gearbox and a screw shaft. The screw shaft may be received within a threaded cylinder housing to engage with each other. The electric motor comprises a stator and a rotor, wherein the rotor of the electric motor is configured to generate a linear movement of the screw shaft. The working surfaces of the electro-mechanical actuator are lubricated for reducing friction and wear between said surfaces.

Document US9520756 B2 discloses an electro-mechanical actuator comprising a static housing, an electric motor and a roller drive. The roller drive comprises an internally threaded nut, which is rotatably mounted in the static housing. The roller drive further comprises threaded rollers and a threaded screw connected to an actuator rod. The screw and actuator rod are mounted coaxially with the nut. The threaded rollers are evenly spaced along the circumference of the screw and contact the internal thread of the nut. Document EP1731421

A1 and US 2009/095098 A1 disclose further linear electro-mechanical actuators according to prior art.

A problem with the prior art is that known electro-mechanical actuators, due to their configuration, are not suitable for heavy loads. The space within the outer static cylinder is occupied by components for driving the actuator, such as motor components and threaded nuts. The dimensions of the nut, screw and threads must therefore be reduced, resulting in that the electro-mechanical actuator cannot handle heavy loads. A further problem is that the outer dimensions, such as the outer diameter of the static cylinder, often must be restricted due to the overall dimensions of the equipment, in which the electro-mechanical actuator is arranged. Further, due to friction between different components in the electro-mechanical actuator, heat is generated. The generated heat may reduce the functionality of the electro-mechanical actuator.

There is thus a need for an improved electro-mechanical actuator, which eliminates the deficiencies and disadvantages with prior art electro-mechanical actuators.

### Summary

It is an object of the present invention to mitigate, alleviate or eliminate one or more of the above-identified deficiencies and disadvantages in the prior art and solve at least the above-mentioned problems.

It is a further objective of the present invention to achieve an electro-mechanical actuator and a working equipment, which can generate large forces, handle heavy loads and still have small and restricted outer dimensions.

It is a further objective of the present invention to be able to replace hydraulic cylinders in a working equipment with electro-mechanical actuators and at same time maintain the capacity to handle heavy loads with the working equipment.

It is a further objective of the present invention to arrange for heat dissipation of generated friction heat in an electro-mechanical actuator.

These objectives are achieved with the above-mentioned electro-mechanical actuator, and working equipment according to the appended claims.

According to the invention there is provided an electro-mechanical actuator for working equipment according to claim 1.

According to the invention, the rotatably arranged cylindrical housing is the outermost load-carrying member and also provides encapsulation. The rolling contact between the actuating rod and the cylindrical housing will this way be achieved at maximum radius, which will maximise the load carrying surfaces. Thus, loads are spread over larger areas and sufficient capacity can be attained without excessive surface loads. Also, by using an outer rotatable cylindrical housing with maximized diameter, the stability is enhanced and the thickness of the cylindrical housing can be relatively thin. Thus, the actuator as disclosed herein can generate large forces, handle heavy loads, and still have small and restricted outer dimensions. The actuator will require less material to attain a specific capacity compared to known prior art and will thereby reduce the weight of the actuator. It will be less sensitive to any local defects or damages and it will be resilient to wear since failure most likely will come gradually. Since the rotatably arranged cylindrical housing is the outermost load-carrying member and also provides encapsulation, friction heat generated in the electro-mechanical actuator may be effectively dissipated from the cylindrical housing. Thus, the actuator as disclosed herein is suitable to replace hydraulic cylinders in a working equipment and would maintain the capacity to handle heavy loads with the working equipment. The working equipment may sometimes function as a cover for the electro-mechanical actuator and it may thus not be necessary to include a separate cover for the rotatable cylindrical housing. In for example loader cranes, the crane structure itself can partly function as a cover.

The electro-mechanical actuator may be connected to an electric source and be driven by electric power. The electric source may be a battery, an accumulator or the electric mains. The actuator may be configured to move a part of the working equipment along the longitudinal axis. The first and second end parts of the electro-mechanical actuator may be configured to be connected to different parts of the working equipment, which parts are movably arranged in relation to each other. The part connected to the first end part may be fixedly arranged, and the other part connected to the second end part may be moved by the actuator. Alternatively, the part connected to the first end part may be movably arranged and be moved by the actuator. The other part connected to the second end part may be fixedly arranged. For example, the first and second end part of the actuator may be connected to two parts of a telescopic boom of a crane to generate a telescopic extension or retraction. Another alternative may be to use the actuator to lift or lower a boom or platform pivotally connected to another part of the working equipment. The first and/or the second end part of the actuator may be configured to be pivotally connected to a part of the working equipment. The actuating rod may be straight and longitudinal and have a circular cross section.

The actuating rod may be provided with outer threads arranged in a surface of the rod. The outer threads may be any kind of threads, which can resist load. The outer threads may be trapezoidal threads or ACME threads. ACME is an abbreviation of American society of mechanical engineers.

The load-carrying cylindrical housing is designed and configured to resist and to transmit forces and loads. The load-carrying cylindrical housing is arranged outside of the actuating rod and is thus both a load-carrying member and provides encapsulation. The cylindrical housing and the actuating rod are concentrically arranged in relation to each other. The inner threads of the load-carrying cylindrical housing may correspond to the outer threads arranged on the actuating rod. Thus, the inner and outer threads may be of the same type and have the same characteristics, such as the same pitch and lead, so that the inner and outer threads can work together.

The electric motor assembly may be connected to the electric source and be driven by electric power. The electric motor assembly may comprise at least one electric motor, which is rotatably connected to the cylindrical housing. The electric motor assembly is configured to rotate the cylindrical housing. The electric motor assembly may be configured to bring the cylindrical housing to rotate in two rotational directions. The actuating rod comprises the second end part of the actuator. The actuating rod is arranged in connection with the cylindrical housing, such that when the electric motor assembly rotates the cylindrical housing, the rotational movement of the cylindrical housing is transformed into linear movement of the actuating rod in relation to the cylindrical housing along the longitudinal axis. For moving or displacing an object/part by means of the electro-mechanical actuator, the actuating rod may be arranged not to rotate during the linear movement. In a first rotational direction of the cylindrical housing, the actuating rod may be linearly moved in a first direction. In a second rotational direction of the cylindrical housing, which is opposite to the first rotational direction, the actuating rod may be linearly moved in a second direction, which is opposite to the first direction. Thus, the distance between the first and second end parts increases or decreases depending on the rotational direction of the cylindrical housing, resulting in that an object connected to the electro-mechanical may be moved back and forth by the electro-mechanical actuator.

The rotational axis of the electric motor assembly may be parallel with the longitudinal axis of the electro-mechanical actuator. Such configuration of the electric motor assembly results in a compact and space saving electro-mechanical actuator. Further, the connection between the electric motor assembly to the outside of the cylindrical housing for rotating the cylindrical housing around the longitudinal axis may be simplified, since the rotational axis of the electric motor assembly and a rotational axis of the cylindrical housing are parallel.

The cylindrical housing is rotatably arranged in relation to the first end part. The first end part may be attached to an object, component or part of the working equipment, which may be used as a reference for the resulting movement of the actuating rod. Therefore, the cylindrical housing is allowed to rotate in relation to the non-rotating first end part. A sensor for determining the rotational speed and distance may be arranged in association with the cylindrical housing or the electric motor assembly. The sensor may extract the rotational speed from the electric motor and/or the rotational speed from the cylindrical housing. By extracting the rotational speed of the electric motor and/or the cylindrical housing, and also the rotational angle of the electric motor and/or the cylindrical housing, the linear speed and distance of the actuating rod can be determined.

The electro-mechanical actuator comprises a conical thrust bearing arranged between the cylindrical housing and the first end part. The conical thrust bearing may be arranged between an outer side of a first end of the cylindrical housing and the first end part. The conical thrust bearing is configured for transmitting the load and will enable the cylindrical housing to rotate in relation to the first end part when the electro-mechanical actuator is carrying loads. Further, the conical thrust bearing may compensate for forces, which are deviating from the linear direction of the longitudinal axis of the electro-mechanical axis.

The cylindrical housing may have a closed first end facing the first end part of the actuator and may comprise an end cap at a second opposite end, the end cap may comprise an opening for guiding the linear movement of the actuating rod. The closed first end and the end cap may together with the actuating rod create a limited hollow space in the cylindrical housing. The space may contain a lubricant, which facilitate the movement of the actuating rod in relation to the cylindrical housing. Further, the lubricant may reduce any wear on the components inside the cylindrical housing. The opening in the end cap may constitute a support for the actuating rod, especially if forces deviating from the longitudinal axis of the electro-mechanical actuator acts in the actuating rod. The opening in the end cap may comprise a guiding surface for the actuating rod in order to enhance the buckling stability of the electro-mechanical actuator. The guiding surface of the end cap may provide an additional point of lateral support for the actuating rod.

The electro-mechanical actuator may comprise an extendable sleeve connected to the second end part of the actuator and the end cap to seal the opening in the end cap. Since the actuator rod may be linearly displaced in relation to the cylindrical housing and thus to the end cap, the sleeve may be extended when the actuating rod is displaced out of the cylindrical housing. The extendable sleeve may prevent lubricant to leak out of the extendable sleeve. Further, the extendable sleeve may prevent debris from outside of the electro-mechanical actuator to pollute the lubricant in the cylindrical housing. A bearing arrangement may be arranged between the extendable sleeve and the end cap in order to allow the end cap to rotate in relation to the extendable sleeve. The bearing arrangement can be a ball bearing, a roller bearing, sliding bearing or similar.

The electro-mechanical actuator may comprise at least two threaded rolling members arranged to engage with the inner threads of the cylindrical housing and the outer threads of the actuating rod. The threaded rolling members will this way transfer the rotational movement of the cylindrical housing to the actuating rod. The rolling members are further configured to transfer force between the cylinder housing to the actuating rod. The threads of the at least two threaded rolling members may correspond to the inner threads of the load-carrying cylindrical housing and to the outer threads arranged on the actuating rod. Thus, the threads of the rolling members, the inner threads of the cylindrical housing and the outer threads of the actuating rod may be of the same type and have the same characteristics, such as the same pitch and lead, so that these threads can work together. A number of threaded rolling members may be spaced along the circumference of the actuating rod and engage the inner threads of the cylindrical housing. A spacer element may keep the threaded rolling members spaced. The threaded rolling members may be arranged in the cylindrical housing, so that a linear movement thereof along the inner thread is prevented, while planetary movement of the threaded rolling members by rolling along threads of the actuating rod and the cylindrical housing is enabled. A restriction member may be arranged in the electro-mechanical actuator for preventing linear movement of the threaded rolling members in the cylindrical housing. Rotation of the cylindrical housing enables linear movement of the actuating rod with respect to the threaded rolling members and the cylindrical housing. The electro-mechanical actuator comprising the threaded rolling members, can generate large forces and handle heavy loads and still have small and restricted outer dimensions. By using threaded rolling members, friction is considerably reduced. The cylindrical housing being the outer rotating, load carrying member will maximise the load carrying surfaces both by the maximised circumference and by allowing a maximum number of threaded rolling members in engagement. The electro-mechanical actuator may comprise any number of rolling members, but preferably at least two rolling members. In one example, the electro-mechanical actuator comprises four rolling members. The pitch and pitch angle for the threaded members (cylindrical housing, the actuating rod and rolling members) should be equal. Furthermore, the diameter of the threaded members should be multiples. As an example, the diameter multiples (actuating rod: rolling member: housing) may be 1:1:3, 2:1:4 or 4:1:6.

The inner threads of the cylindrical housing may alternatively engage directly with the outer threads of the actuating rod. The cylindrical housing may transfer the rotational movement directly to the actuating rod, which rotational movement is converted to a linear movement of the actuating rod. The inner threads of the cylindrical housing transfer force from the cylinder housing to the outer threads of the actuating rod. Such configuration keep the number of components of the electro-mechanical actuator to a minimum. Further, such electro-mechanical actuator, wherein the inner threads of the cylindrical housing may engage with the outer threads of the actuating rod, can generate large forces and handle heavy loads and still have small and restricted outer dimensions. Further, such electro-mechanical actuator can replace hydraulic cylinders in a working equipment and at same time maintain the capacity to handle heavy loads with the working equipment.

The mechanical construction of the electro-mechanical actuator as disclosed herein will result in self-locking between the different threaded members (cylindrical housing, actuating rod and rolling members) when there is no force rotating the cylindrical housing. More specifically, the configuration of the pitch and pitch angle of the threaded members of the electro-mechanical actuator will result in self-locking between the threaded members. The configuration of the threaded members and their pitch and pitch angle may in other words comprise an integral self-locking function. Thus, in the event that there is a loss of electric power, the battery is discharged or the electric motor for any other reason fails to rotate the cylindrical housing, the self-locking function will cause the actuator to stop in its current position. The self-locking between the threaded members will in such event prevent any linear movement of the actuating rod and the electro-mechanical actuator will be able to carry the currently applied load. Thus, the configuration of the pitch and pitch angle of the threaded members of the electro-mechanical actuator will ensure safety.

The electro-mechanical actuator may comprise a magnetic element arranged inside the cylindrical housing for collecting wear particles. Upon use, surfaces of the electro-mechanical actuator may be subjected to stressing loads, such as rotational, radial and/or axial forces, which may lead to a loss of lubricants being applied to these surfaces. Further, during driving in the electro-mechanical actuator, the components which move in relation to each other may be subjected to wear during a period of time. This may result in that small particles may be released from these surfaces as wear particles. Collection of these wear particles on the magnetic element may reduce the possibility that the wear particles contribute to further wear due to an abrasive effect between moving component in the cylindrical housing. The magnetic element thus increases the life time service of the electro-mechanical actuator.

The electro-mechanical actuator may comprise a load sensing device. The load sensing device may be arranged between the first end part and the first end of the cylindrical housing or the load sensing device may be arranged in association with the cylindrical housing. The load sensing device may detect the load generated by the electro-mechanical actuator and the load the electro-mechanical actuator is subjected to. The load sensing device may detect both pressure loads and tensile loads acting on the electro-mechanical actuator. The load sensing device may be connected to a control device, which may detect any overload acting on the electro-mechanical actuator. The load sensing device may comprise a load cell and/or a wire strain gauge.

The electric motor assembly may rotate the cylindrical housing by means of a gear arrangement, chain or belt drive. The gear arrangement may be a transmission comprising gear wheels of different diameters. The rotational direction of the electric motor may be reversed, which may reverse the rotational movement of the cylindrical housing and thus the linear direction of the actuating rod. The belt or chain may be arranged around the cylindrical housing and a wheel arranged on the electric motor.

The first end part may be connected to the cylindrical housing inside the cylindrical housing, and wherein the actuator further may comprise a bearing device arranged inside the cylindrical housing between the first end part and the cylindrical housing. The bearing device may be arranged between an inner side of the first end of the cylindrical housing and the first end part inside the cylindrical housing. The bearing device is configured to compensate for any forces on the cylindrical housing in the direction away from the first end part, such as when the actuating rod exerts a pulling force on an object. In case there are tensile loads acting on the actuating rod, the bearing device may prevent the cylindrical housing to be separated from the first end part. The first end part may protrude inside the cylindrical housing through an opening in the distal (first) end of the cylindrical housing. The bearing device may be a ball bearing, a roller bearing or a sliding bearing.

According to the invention there is provided a working equipment according to claim 12 comprising an electro-mechanical actuator according to any of the claims 1 to 11.

The working equipment may for example be a loader crane, forklift, tail lift, skip loader or a hook-lift, which may be used for applications in e.g. logistics, waste and recycling or forestry applications. Such working equipment may comprise a movable arm, a boom system or a platform actuated by an electro-mechanical actuator according to the first aspect claims. A loader crane may e.g. be provided with a boom system comprising a first and a second liftable and lowerable crane boom. The booms are articulately connected to each other and to electro-mechanical actuators as disclosed herein, for lifting and lowering the crane booms. Further, the working equipment may comprise a telescopic boom where the movement of a telescopic extension boom with reference to a main boom may be actuated by means of an electro-mechanical actuator as disclosed herein. The working equipment may further comprise working tools to e.g. pick up objects, dig, harvest etc., and hence be used in the work performed with the working equipment. For working equipment comprising a moveable arm, such in the case of a crane, a forestry machine, a wheel loader or an excavator, a working tool may be mounted to an end of the movable arm. Examples of such working tools include grapples, clamshell buckets, buckets, brick grabs and grips. The electro-mechanical actuator according to the invention may be used to operate the movements of the working tools to interact with objects or material to be picked up, harvested, collected etc. One example may be to arrange the electro-mechanical actuator according to the invention to control the movement of e.g. grapple shells in order to pick material from a container to be recycled or logs in the forest. Another example is to arrange the electro-mechanical actuator according to the invention to control the relative pivoting angle of e.g. a bucket when digging or shovelling. The working equipment may further be a forklift, tail lift, skip loader or a demountable. The working equipment may be provided with both an electro-mechanical actuator as disclosed herein and one or more hydraulic actuators. For example, a loader crane arranged on a vehicle may be provided with hydraulic actuators, and extending stabilizer legs of the vehicle may be provided with electro-mechanical actuators as disclosed herein. Further, the movable arm of a crane may be actuated by an electro-mechanical actuator as disclosed herein, and the boom system may be actuated by hydraulic actuators.

The working equipment may be configured to be arranged on a vehicle. The vehicle may be an electric driven vehicle. The vehicle may be propelled by a combustion engine. The vehicle may comprise electric batteries for providing the electro-mechanical actuator with electric power. The vehicle may be an autonomous vehicle, or a semi-autonomous vehicle.

Effects and features of the second aspect are to a large extent analogous to those described above in connection with the first aspect. Embodiments mentioned in relation to the first aspect are largely compatible with the second aspect.

The present invention will become apparent from the detailed description given below. The detailed description and specific examples disclose preferred embodiments of the invention by way of illustration only. Those skilled in the art understand from guidance in the detailed description that changes and modifications may be made within the scope of the invention as defined in the accompanying claims.

### Brief descriptions of the drawings

The above objects, as well as additional objects, features and advantages of the present invention will be more fully appreciated by reference to the following illustrative and non-limiting detailed description of example embodiments of the present invention, when taken in conjunction with the accompanying drawings.
Fig. 1 schematically illustrates an electro-mechanical actuator in a section view according to an example;
Figure 2a schematically illustrates the electro-mechanical actuator in a perspective view according to an example;
Figure 2b schematically illustrates a cylindrical housing of the electro-mechanical actuator in a perspective view according to an example;
Fig. 3 schematically illustrates a first end part of the electro-mechanical actuator in a section view according to an example;
Fig. 4 schematically illustrates the first end part of the electro-mechanical actuator provided with a load sensing device in a section view according to an example;
Fig. 5 schematically illustrates the electro-mechanical actuator in a section view with an actuating rod in a linearly extended position according to an example;
Fig. 6 schematically illustrates an electro-mechanical actuator in a section view with an actuating rod in a linearly extended position according to an example;
Fig. 7a schematically illustrates a working equipment in a retracted position according to an example; and
Fig. 7b schematically illustrates a working equipment arranged on a vehicle according to an example.

### Detailed description

The present invention will now be described with reference to the accompanying drawings, in which preferred example embodiments of the invention are shown. The invention may, however, be embodied in other forms and should not be construed as limited to the herein disclosed embodiments. The disclosed embodiments are provided to fully convey the scope of the invention to the skilled person.

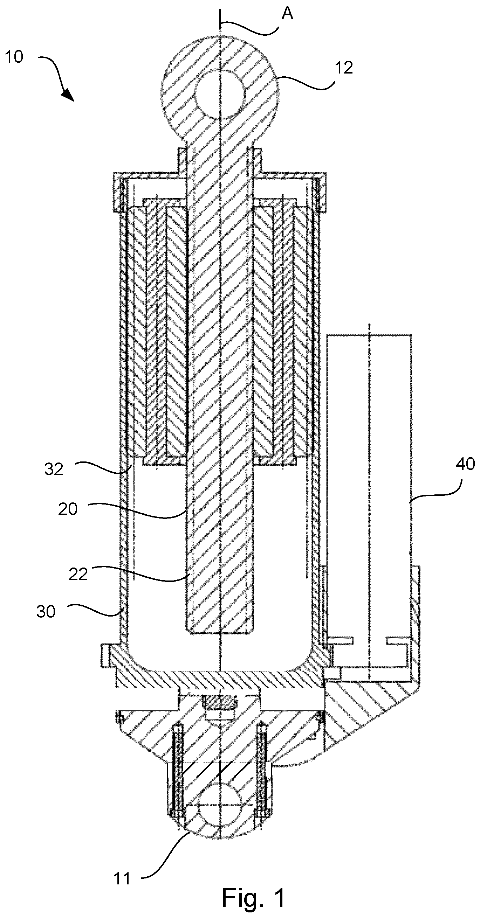

Fig. 1 schematically illustrates an electro-mechanical actuator 10 in a section view according to an example. The electro-mechanical actuator 10 extends along a longitudinal axis A and comprises a first end part 11 and a second end part 12. The electro-mechanical actuator 10 also comprises an actuating rod 20, which comprises outer threads 22. A load-carrying cylindrical housing 30 is concentrically arranged outside the actuating rod 20. The housing 30 comprising inner threads 32. An electric motor assembly 40 is connected to the outside of the cylindrical housing (30) to rotate the cylindrical housing (30) around the longitudinal axis (A). The actuating rod 20 comprises the second end part 12 of the actuator 10 and is arranged in connection with the cylindrical housing 30, such that when the electric motor assembly 40 rotates the cylindrical housing 30, the rotational movement of the cylindrical housing 30 is transformed into linear movement of the actuating rod 20 in relation to the cylindrical housing 30 along the longitudinal axis A, whereby the distance between the first and second end parts 11, 12 increases or decreases depending on the rotational direction of the cylindrical housing 30.

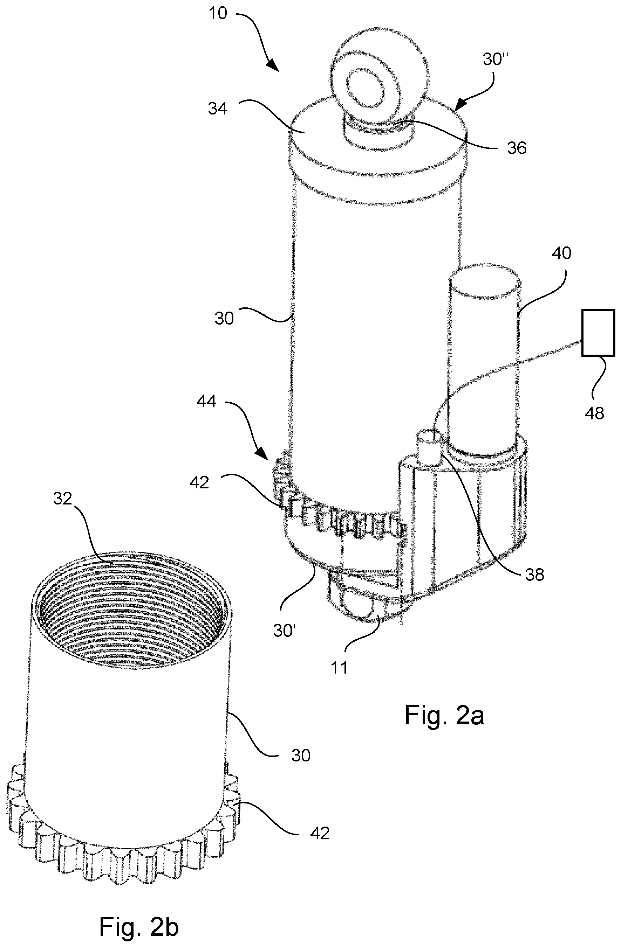

Figure 2a schematically illustrates the electro-mechanical actuator 10 in a perspective view according to an example. The electric motor assembly 40 rotates the cylindrical housing 30 by means of a gear arrangement. The cylindrical housing 30 has a closed first end 30' facing the first end part 11 of the actuator and comprises an end cap 34 at a second opposite end 30". The end cap 34 comprises an opening 36 for guiding the linear movement of the actuating rod 20. A sensor 38 for determining the rotational speed and distance may be arranged in association with the cylinder housing 30 or the electric motor assembly 40. The sensor 38 may extract the rotational speed from the electric motor assembly 40 and/or the rotational speed from the cylindrical housing 30. Gears 42 of a gear arrangement 44 are circumferentially arranged on the cylindrical housing 30. Corresponding gears (not disclosed) arranged on the electric motor assembly 40 engage the gears 42 on the cylindrical housing 30 for generating the rotational motion of the cylindrical housing 30. The sensor 38 is typically connected to a control device 48.

Figure 2b schematically illustrates the cylindrical housing 30 of the electro-mechanical actuator 10 in a perspective view according to an example. The housing 30 comprising inner threads 32. The gears 42 of the gear arrangement 44 are circumferentially arranged on the cylindrical housing 30. The gears 42 may be arranged at any position along the longitudinal axis A on the outside of the cylindrical housing 30. In fig. 2b, only a part of the cylindrical housing 30 is disclosed.

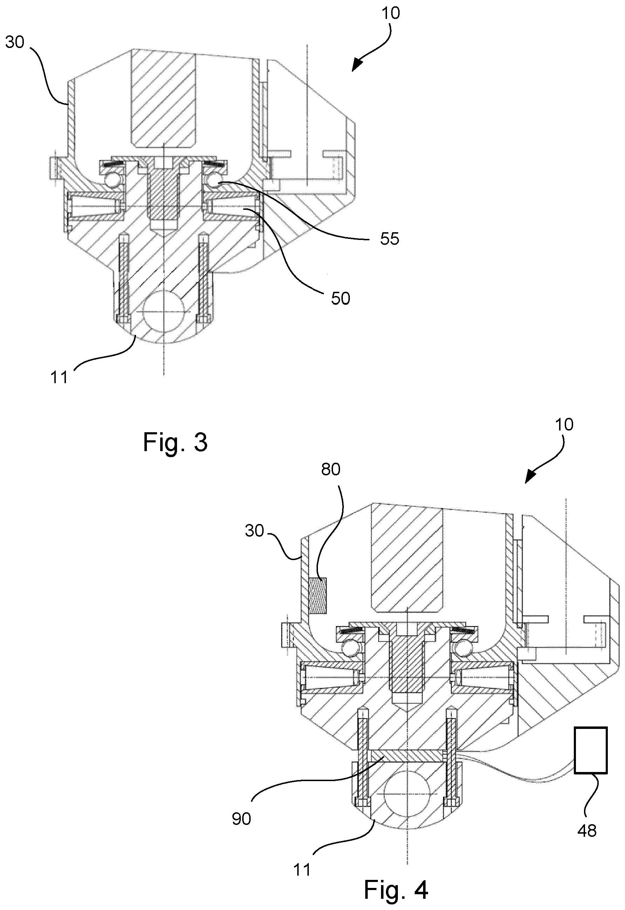

Fig. 3 schematically illustrates the first end part 11 of the electro-mechanical actuator 10 in a section view according to an example. The cylindrical housing 30 is rotatably arranged in relation to the first end part 11. The electro-mechanical actuator 10 comprises a conical thrust bearing 50 arranged between the cylindrical housing 30 and the first end part 11. The first end part 11 is connected to the cylindrical housing 30 inside the cylindrical housing 30, and wherein the actuator further comprises a bearing device 55 arranged inside the cylindrical housing 30 between the first end part 11 and the cylindrical housing 30. The bearing device 55 is in this example a ball bearing but it is to be understood that it can be a roller bearing, sliding bearing or similar.

Fig. 4 schematically illustrates the first end part 11 of the electro-mechanical actuator 10 provided with a load sensing device 90 in a section view according to an example. The load sensing device 90 is arranged between two separate portions of the first end part 11. The load sensing device 90 may be integral with the first end part 11. The load sensing device 90 is connected to the control device 48. The electro-mechanical actuator 10 further comprises a magnetic element 80 arranged inside the cylindrical housing 30 for collecting wear particles.

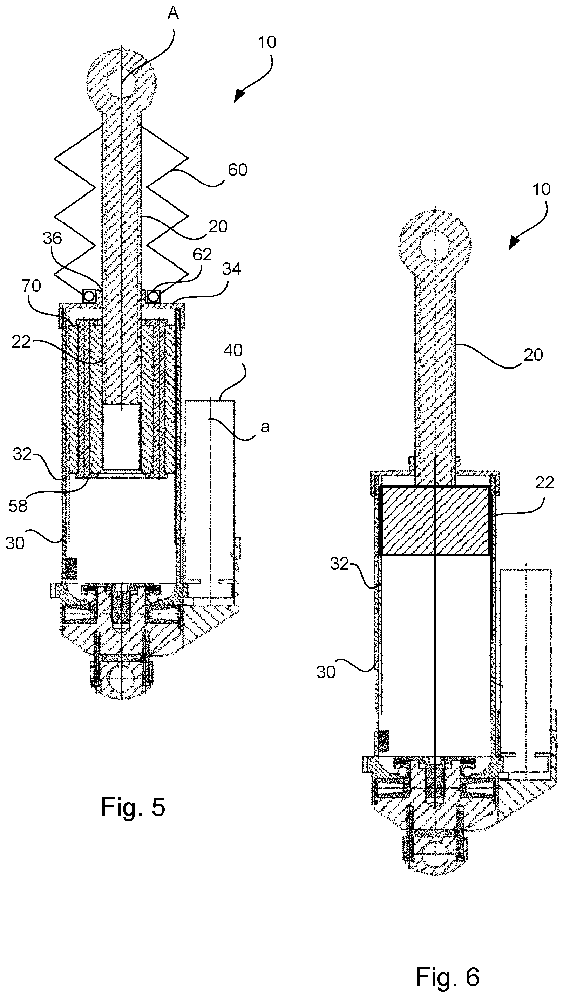

Fig. 5 schematically illustrates the electro-mechanical actuator 10 in a section view with the actuating rod 20 in a linearly extended position according to an example. The rotational axis a of the electric motor assembly 40 is parallel with the longitudinal axis A of the electro-mechanical actuator 10. The electro-mechanical actuator 10 comprises an extendable sleeve 60 connected to the second end part 12 of the actuator 10 and the end cap 34 to seal the opening 36 in the end cap 34. A bearing arrangement 62 is arranged between the extendable sleeve 60 and the end cap 34 in order to allow the end cap 34 to rotate in relation to the extendable sleeve 60. The bearing arrangement 62 can be a ball bearing, a roller bearing, sliding bearing or similar. The electro-mechanical actuator 10 comprises threaded rolling members 70 arranged to engage with the inner threads 32 of the cylindrical housing 30 and the outer threads 22 of the actuating rod 20. A spacer element 58 may keep the threaded rolling members 70 spaced from each other. The actuator 10 is a push/pull actuator.

Fig. 6 schematically illustrates an electro-mechanical actuator 10 in a section view with an actuating rod 20 in a linearly extended position according to an alternative example. In this example, the inner threads 32 of the cylindrical housing 30 engages directly with the outer threads 22 of the actuating rod 20.

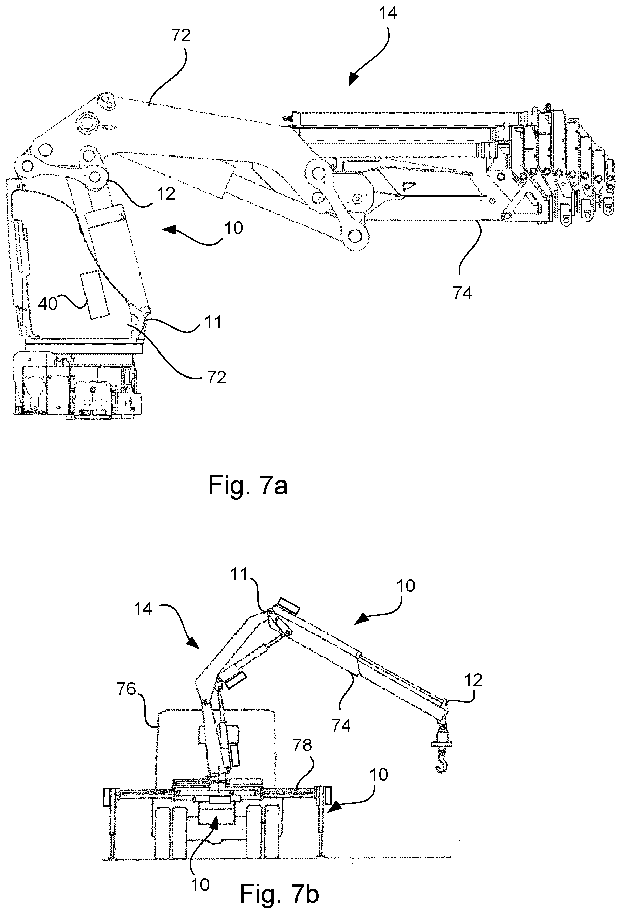

Fig. 7a schematically illustrates a working equipment 14 in a retracted position according to an example. The working equipment 14 is a loader crane comprising movable arms 72 and a telescopic crane boom 74. The movable arms 72 are articulately connected to each other and to an electro-mechanical actuator 10, for lifting and lowering the crane boom 74. The first and second end part 11, 12 may be arranged to be pivotally mounted to the movable arms 72.

Fig. 7b schematically illustrates a working equipment 14 arranged on a vehicle 76 according to an example. The working equipment 14 is a loader crane comprising a telescopic boom 74. The first and second end part 11, 12 may be connected to two parts of the telescopic boom 74 to generate a telescopic extension or retraction. The electro-mechanical actuators 10 are also used for extending stabilizer legs 78 of the vehicle 76.

The person skilled in the art realizes that the present invention is not limited to the preferred embodiments described above. The person skilled in the art further realizes that modifications and variations are possible within the scope of the appended claims.

## Claims

1. An electro-mechanical actuator (10) for working equipment (14), the actuator (10) extending along a longitudinal axis (A) and comprising:
a first end part (11) and a second end part (12);
an actuating rod (20) comprising outer threads (22);
a load-carrying cylindrical housing (30) concentrically arranged outside the actuating rod (20), the cylindrical housing (30) comprising inner threads (32); and
an electric motor assembly (40) connected to the outside of the cylindrical housing (30) to rotate the cylindrical housing (30) around the longitudinal axis (A);
wherein the actuating rod (20) comprises the second end part (12) of the actuator and is arranged in connection with the cylindrical housing (30), such that when the electric motor assembly (40) rotates the cylindrical housing (30), the rotational movement of the cylindrical housing (30) is transformed into linear movement of the actuating rod (20) in relation to the cylindrical housing (30) along the longitudinal axis (A), whereby the distance between the first and second end parts (11,12) increases or decreases depending on the rotational direction of the cylindrical housing (30), **characterized in that** the cylindrical housing (30) is the outermost load-carrying member which also provides encapsulation, and is rotatably arranged in relation to the first end part (11), and **in that** the electro-mechanical actuator (10) further comprises a conical thrust bearing (50) arranged between the cylindrical housing (30) and the first end part (11).

2. The electro-mechanical actuator (10) according to claim 1, wherein the rotational axis of the electric motor assembly (40) is parallel with the longitudinal axis (A) of the electro-mechanical actuator (10).

3. The electro-mechanical actuator (10) according to any one of the preceding claims, wherein the cylindrical housing (30) has a closed first end (30') facing the first end part (11) of the actuator and comprises an end cap (34) at a second opposite end (30"), the end cap (34) comprising an opening (36) for guiding the linear movement of the actuating rod (20).

4. The electro-mechanical actuator (10) according to claim 3, further comprising an extendable sleeve (60) connected to the second end part (12) of the actuator and the end cap (34) to seal the opening (36) in the end cap (34).

5. The electro-mechanical actuator (10) according to any one of the preceding claims, further comprising at least two threaded rolling members (70) arranged to engage with the inner threads (32) of the cylindrical housing (30) and the outer threads (22) of the actuating rod (20).

6. The electro-mechanical actuator (10) according to any one of claims 1-4, wherein the inner threads (32) of the cylindrical housing (30) engages with the outer threads (22) of the actuating rod (20).

7. The electro-mechanical actuator (10) according to any one of the preceding claims, wherein the actuator is a push/pull actuator.

8. The electro-mechanical actuator (10) according to any one of the preceding claims, further comprising a magnetic element (80) arranged inside the cylindrical housing (30) for collecting wear particles.

9. The electro-mechanical actuator (10) according to any one of the preceding claims, further comprising a load sensing device (90).

10. The electro-mechanical actuator (10) according to any one of the preceding claims, wherein the electric motor assembly (40) rotates the cylindrical housing (30) by means of a gear arrangement, chain or belt drive.

11. The electro-mechanical actuator (10) according to any one of the preceding claims, wherein the first end part (11) is connected to the cylindrical housing (30) inside the cylindrical housing (30), and wherein the actuator further comprises a bearing device (55) arranged inside the cylindrical housing (30) between the first end part (11) and the cylindrical housing (30).

12. A working equipment (14) comprising an electro-mechanical actuator (10) according to any one of the preceding claims.

13. The working equipment (14) according to claim 12, wherein the working equipment (14) is configured to be arranged on a vehicle (16).

## Patentansprüche

1. Elektromechanischer Aktuator (10) für eine Arbeitsausrüstung (14), wobei sich der Aktuator (10) entlang einer Längsachse (A) erstreckt und Folgendes umfasst:
ein erstes Endteil (11) und ein zweites Endteil (12);
eine Betätigungsstange (20), die Außengewinde (22) umfasst;
ein lasttragendes zylindrisches Gehäuse (30), das konzentrisch außerhalb der Betätigungsstange (20) angeordnet ist, wobei das zylindrische Gehäuse (30) Innengewinde (32) umfasst; und
eine Elektromotorbaugruppe (40), die mit dem Äußeren des zylindrischen Gehäuses (30) verbunden ist, um das zylindrische Gehäuse (30) um die Längsachse (A) zu drehen;
wobei die Betätigungsstange (20) das zweite Endteil (12) des Aktuators umfasst und in Verbindung mit dem zylindrischen Gehäuse (30) angeordnet ist, so dass, wenn die Elektromotorbaugruppe (40) das zylindrische Gehäuse (30) dreht, die Drehbewegung des zylindrischen Gehäuses (30) in eine lineare Bewegung der Betätigungsstange (20) in Bezug auf das zylindrische Gehäuse (30) entlang der Längsachse (A) umgewandelt wird, wobei der Abstand zwischen dem ersten und dem zweiten Endteil (11, 12) abhängig von der Drehrichtung des zylindrischen Gehäuses (30) zunimmt oder abnimmt, **dadurch gekennzeichnet, dass** das zylindrische Gehäuse (30) das äußerste lasttragende Glied ist, das auch die Einkapselung bereitstellt und drehbar in Bezug auf das erste Endteil (11) angeordnet ist, und dadurch, dass der elektromechanische Aktuator (10) ferner ein konisches Drucklager (50) umfasst, das zwischen dem zylindrischen Gehäuse (30) und dem ersten Endteil (11) angeordnet ist.

2. Elektromechanischer Aktuator (10) nach Anspruch 1, wobei die Drehachse der Elektromotorbaugruppe (40) parallel zu der Längsachse (A) des elektromechanischen Aktuators (10) verläuft.

3. Elektromechanischer Aktuator (10) nach einem der vorhergehenden Ansprüche, wobei das zylindrische Gehäuse (30) ein geschlossenes erstes Ende (30') aufweist, das dem ersten Endteil (11) des Aktuators zugewandt ist, und eine Endkappe (34) an einem zweiten gegenüberliegenden Ende (30") umfasst, wobei die Endkappe (34) eine Öffnung (36) zum Führen der linearen Bewegung der Betätigungsstange (20) umfasst.

4. Elektromechanischer Aktuator (10) nach Anspruch 3, ferner umfassend eine ausziehbare Hülse (60), die mit dem zweiten Endteil (12) des Aktuators und der Endkappe (34) verbunden ist, um die Öffnung (36) in der Endkappe (34) abzudichten.

5. Elektromechanischer Aktuator (10) nach einem der vorhergehenden Ansprüche, ferner umfassend mindestens zwei Gewindewalzglieder (70), die dazu angeordnet sind, mit den Innengewinden (32) des zylindrischen Gehäuses (30) und den Außengewinden (22) der Betätigungsstange (20) in Eingriff zu stehen.

6. Elektromechanischer Aktuator (10) nach einem der Ansprüche 1-4, wobei die Innengewinde (32) des zylindrischen Gehäuses (30) mit den Außengewinden (22) der Betätigungsstange (20) in Eingriff steht.

7. Elektromechanischer Aktuator (10) nach einem der vorhergehenden Ansprüche, wobei der Aktuator ein Push/Pull-Aktuator ist.

8. Elektromechanischer Aktuator (10) nach einem der vorhergehenden Ansprüche, ferner umfassend ein magnetisches Element (80), das innerhalb des zylindrischen Gehäuses (30) zum Sammeln von Verschleißpartikeln angeordnet ist.

9. Elektromechanischer Aktuator (10) nach einem der vorhergehenden Ansprüche, ferner umfassend eine Lasterfassungsvorrichtung (90).

10. Elektromechanischer Aktuator (10) nach einem der vorhergehenden Ansprüche, wobei die Elektromotorbaugruppe (40) das zylindrische Gehäuse (30) mittels einer Getriebeanordnung, eines Ketten- oder Riemenantriebs dreht.

11. Elektromechanischer Aktuator (10) nach einem der vorhergehenden Ansprüche, wobei das erste Endteil (11) mit dem zylindrischen Gehäuse (30) innerhalb des zylindrischen Gehäuses (30) verbunden ist und wobei der Aktuator ferner eine Lagervorrichtung (55) umfasst, die innerhalb des zylindrischen Gehäuses (30) zwischen dem ersten Endteil (11) und dem zylindrischen Gehäuse (30) angeordnet ist.

12. Arbeitsausrüstung (14), umfassend einen elektromechanischen Aktuator (10) nach einem der vorhergehenden Ansprüche.

13. Arbeitsausrüstung (14) nach Anspruch 12, wobei die Arbeitsausrüstung (14) dazu konfiguriert ist, an einem Fahrzeug (16) angeordnet zu werden.

## Revendications

1. Actionneur électromécanique (10) pour équipement de travail (14), l'actionneur (10) s'étendant le long d'un axe longitudinal (A) et comprenant :
une première partie d'extrémité (11) et une seconde partie d'extrémité (12) ;
une tige d'actionnement (20) comprenant un filetage externe (22) ;
un boîtier cylindrique porteur de charge (30) agencé de manière concentrique à l'extérieur de la tige d'actionnement (20), le boîtier cylindrique (30) comprenant un filetage interne (32) ; et
un ensemble moteur électrique (40) relié à l'extérieur du boîtier cylindrique (30) pour faire tourner le boîtier cylindrique (30) autour de l'axe longitudinal (A) ;
dans lequel la tige d'actionnement (20) comprend la seconde partie d'extrémité (12) de l'actionneur et est agencée en liaison avec le boîtier cylindrique (30), de sorte que, lorsque l'ensemble moteur électrique (40) fait tourner le boîtier cylindrique (30), le mouvement de rotation du boîtier cylindrique (30) est transformé en un mouvement linéaire de la tige d'actionnement (20) par rapport au boîtier cylindrique (30) le long de l'axe longitudinal (A), moyennant quoi la distance entre les première et seconde parties d'extrémité (11, 12) augmente ou diminue en fonction du sens de rotation du boîtier cylindrique (30), **caractérisé en ce que** le boîtier cylindrique (30) est l'élément porteur de charge le plus externe qui assure également l'encapsulation, et est agencé de manière rotative par rapport à la première partie d'extrémité (11), et **en ce que** l'actionneur électromécanique (10) comprend en outre une butée conique (50) agencée entre le boîtier cylindrique (30) et la première partie d'extrémité (11).

2. Actionneur électromécanique (10) selon la revendication 1, dans lequel l'axe de rotation de l'ensemble moteur électrique (40) est parallèle à l'axe longitudinal (A) de l'actionneur électromécanique (10).

3. Actionneur électromécanique (10) selon l'une quelconque des revendications précédentes, dans lequel le boîtier cylindrique (30) présente une première extrémité fermée (30') faisant face à la première partie d'extrémité (11) de l'actionneur et comprend un embout (34) au niveau d'une seconde extrémité opposée (30"), l'embout (34) comprenant une ouverture (36) pour guider le mouvement linéaire de la tige d'actionnement (20).

4. Actionneur électromécanique (10) selon la revendication 3, comprenant en outre un manchon extensible (60) relié à la seconde partie d'extrémité (12) de l'actionneur et à l'embout (34) pour étanchéifier l'ouverture (36) dans l'embout (34).

5. Actionneur électromécanique (10) selon l'une quelconque des revendications précédentes, comprenant en outre au moins deux éléments roulants filetés (70) agencés pour venir en prise avec le filetage interne (32) du boîtier cylindrique (30) et le filetage externe (22) de la tige d'actionnement (20).

6. Actionneur électromécanique (10) selon l'une quelconque des revendications 1 à 4, dans lequel le filetage interne (32) du boîtier cylindrique (30) vient en prise avec le filetage externe (22) de la tige d'actionnement (20).

7. Actionneur électromécanique (10) selon l'une quelconque des revendications précédentes, dans lequel l'actionneur est un actionneur de poussée-traction.

8. Actionneur électromécanique (10) selon l'une quelconque des revendications précédentes, comprenant en outre un élément magnétique (80) agencé à l'intérieur du boîtier cylindrique (30) pour collecter les particules d'usure.

9. Actionneur électromécanique (10) selon l'une quelconque des revendications précédentes, comprenant en outre un dispositif de détection de charge (90).

10. Actionneur électromécanique (10) selon l'une quelconque des revendications précédentes, dans lequel l'ensemble moteur électrique (40) fait tourner le boîtier cylindrique (30) au moyen d'un agencement d'engrenages, d'un entraînement par chaîne ou par courroie.

11. Actionneur électromécanique (10) selon l'une quelconque des revendications précédentes, dans lequel la première partie d'extrémité (11) est reliée au boîtier cylindrique (30) à l'intérieur du boîtier cylindrique (30), et dans lequel l'actionneur comprend en outre un dispositif de palier (55) agencé à l'intérieur du boîtier cylindrique (30) entre la première partie d'extrémité (11) et le boîtier cylindrique (30).

12. Équipement de travail (14) comprenant un actionneur électromécanique (10) selon l'une quelconque des revendications précédentes.

13. Équipement de travail (14) selon la revendication 12, dans lequel l'équipement de travail (14) est configuré pour être agencé sur un véhicule (16).
